# EUROPEAN PATENT SPECIFICATION

(11) **EP 3 416 531 B1**
(45) Date of publication and mention of the grant of the patent: **01.01.2020**
(21) Application number: 17714311.2
(22) Date of filing: 06.02.2017
(51) Int. Cl.: A47J 31/56

(54) **SYSTEM AND METHOD FOR PREPARING BEVERAGES**
SYSTEM UND VERFAHREN ZUR HERSTELLUNG VON GETRÄNKEN
SYSTÈME ET PROCÉDÉ DE PRÉPARATION DE BOISSONS

(30) Priority: 19.02.2016 IT UB20160837
(43) Date of publication of application: 26.12.2018
(73) Proprietor: Sandenvendo Europe S.p.A., 15030 Coniolo (AL) (IT)
(72) Inventor: SPAGNA, Danilo, I-15030 Coniolo (AL) (IT)
(74) Representative: Garavelli, Paolo
(86) International application number: PCT/IT2017/000023
(87) International publication number: WO 2017/141281

(56) References cited:
- WO-A1-2015/056241
- WO-A2-2014/195842
- US-A1- 2006 096 465
- US-A1- 2013 298 776

## Description

The present invention refers to a method for preparing beverages.

In particular, the present invention deals with systems for preparing beverages, in which a system and a method are necessary which are able to thermo-dynamically manage a forced fluid through a pump and heated by a heat exchanger.

Apparatuses for beverages are known comprising elements or parts or accessories for programming the treatment of a fluid, in particular with a pump and in a thermal exchange relationship.

The state of the art if given by patents about systems for preparing beverages comprising control apparatuses for the temperature of water heaters. For example, patent application US-A1-20130055902 deals with a device for heating water and produce steam comprising a first temperature sensor associated with a first water heater and a second temperature sensor associated with a second water heater, both connected to an electronic unit, which, by means of such sensors, receives information about the temperature of the two heaters and of their related controls of electric resistances. The device allows finding a relationship between the first and the second heater through a computing algorithm which uses the temperature value of a single sensor for determining the optimum temperature of the device, a second of the physical and geometric features of the heater.

Substantially, patent application US-A1-20130055902 solves the problem of determining the optimum temperature of a device by providing a temperature value through a temperature sensor next to the outlet of the first heater, the electronic unit being programmed to perform a computation to evaluate the outlet temperature of the second heater.

Patent EP-B1-1898757 is known, which deals with an apparatus for producing hot beverages comprising a device for heating water through a heat source, a seat adapted to receive a product for preparing the beverage, a supplying duct for hot water from the device for heating water to the seat, a first temperature sensor associated with the device for heating water, control means operatively associated with the first temperature sensor and with the heat source to control the temperature of water contained in the device by turning on/off a heat generator, a second temperature sensor associated with the supplying duct for hot water. The control means allow checking the temperature of water contained in the device, by turning on/off the heat generator, depending on the temperature detected by the second temperature sensor and continuously checking the temperature detected by the first and second temperature sensor to be able to determine an optimum temperature value by taking the temperature detected by the first sensor to a value depending on the temperature detected by the second sensor.

Substantially, patent EP-B1-1898757 solves the problem of turning off/on the heat source through the control unit adapted to store a predetermined algorithm, (Td=f(Tc)), related to a detected temperature value (Tc) of the second sensor, for which the temperature value (Td) of the first sensor is determined, which allows optimizing the temperature generated to have hot beverages.

However, such state of the art does not solve the problem of managing the hot water temperature in a tank heated through a combined control, both of electric parameters, for example, an electric motor of a pump, both of thermo-dynamic parameters, for example the pump water flow-rate.

Documents WO-A1-2015/056241, US-A1-2013/298776, US-A1-2006/096465 and WO-A2-195842 disclose systems for preparing beverages.

Therefore, object of the present invention is solving the above prior art problems by providing a method to supply hot water operating through the optimum check of a combination of electric and hydraulic variables.

A further object of the present invention is controlling the temperature of a fluid, going out of a heat exchanger, the system being free from means adapted to detect the temperature difference at the exchanger inlet and outlet.

A further object the present invention is providing a method capable of keeping a constant value of the temperature of the fluid going out of the exchanger.

The above and other objects and advantages of the invention, as will appear from the following description, are obtained with a method for preparing beverages as claimed in the respective independent claim.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

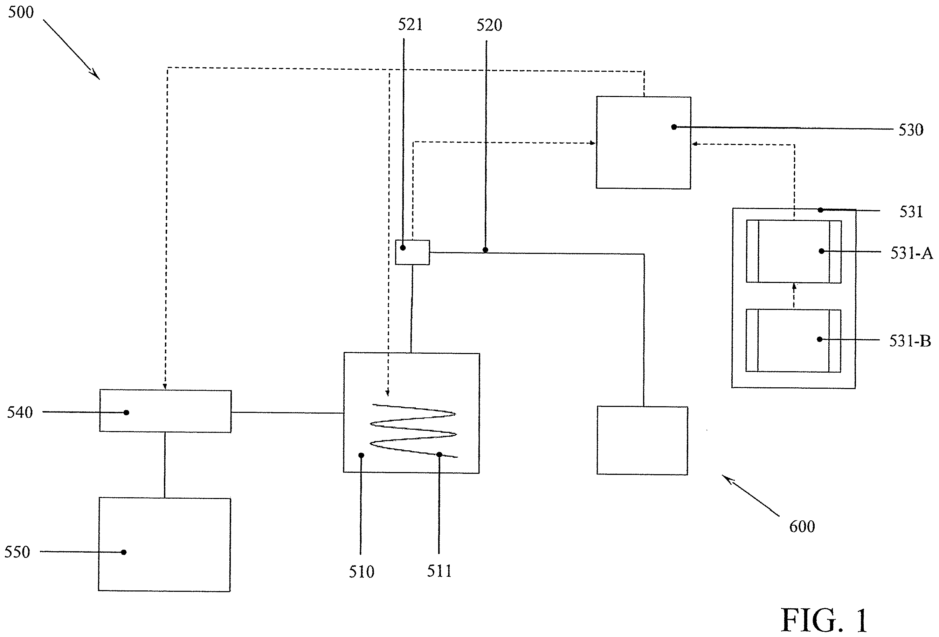

The present invention will be better described by some preferred embodiments thereof, provided as a non-limiting example, with reference to the only enclosed drawings, in which Figure 1 shows a block and operating diagram of a preferred embodiment of the system according to the present invention.

With reference to Figure 1, it is possible to note that the system for preparing beverages according to the present invention comprises at least one water supplying assembly 500 for at least one unit 600 for producing a hot beverage. Such assembly 500 comprises at least one device 510 for heating water equipped with at least one heat source 511, at least one pump 540 interposed between at least one water container 550 and the device 510, at least one supplying duct 520 of hot water from the device 510 to the unit 600, at least one temperature sensor 521 associated with the duct 520, control means 530 operatively associated with such sensor 521 and to the pump 540 to be able to continuously check the water temperature in the duct 520 and to control the operation of the pump 540.

The control means 530 comprise at least one processor 531 adapted to check frequency, voltage and current of the electric motor of the pump 540 to be able to change the water flow-rate depending on the temperature detected by such sensor 521.

Such heat source 511 is composed of a battery of electric resistances controlled by the control means 530 to allow the processor 531 to select each electric resistance depending on the temperature detected by the temperature sensor 521.

A method for preparing beverages, through a system comprising a water supplying assembly 500 for a unit 600 for producing a hot beverage as previously described comprises the following steps:
- the processor 531 uses an algorithm 531-A to set the selection of each electric resistance of the heat source 511, depending on the desired temperature next to the duct 520;
- the processor 531 uses an algorithm 531-B for defining the flow-rate of the pump 540, depending on the algorithm 531-A and on the value of frequency, voltage and current of the electric motor of the pump 540;
- the processor 531 continuously updated the definition of the flow-rate of the pump 540 to keep the temperature constant next to the duct 520.

The system for preparing beverages of the present invention allows obtaining its pre-set objects.

In particular, the system allows keeping a constant value of the temperature of the fluid going out of the device for heating water.

The system has a processor available which is adapted to allow setting values of frequency Hz, voltage V and current I of the pump, depending on the temperature detected by the temperature sensor. Through an algorithm, the pump flow-rate is set and defined depending on such electric parameters Hz, V, I. In case of variation of the reading of the output value of the fluid temperature, it is possible to modulate the frequency and/or the voltage and/or the current of the pump. In this way, the pump is subjected to a flow-rate variation depending on a constant value of the amount of heat given by the device for heating water, with consequent keeping its output temperature.

The device for heating water can have one or more heating elements with simultaneous or variable management of the single resistances.

## Claims

1. Method for preparing beverages through a system comprising a water supplying assembly (500) for a unit (600) for producing a hot beverage, said assembly (500) comprising at least one device (510) for heating water equipped with at least one heat source (511), at least one pump (540) interposed between at least one container (550) of water and said device (510), at least one supplying duct (520) of hot water from said device (510) to said unit (600), at least one temperature sensor (521) associated with said duct (520), control means (530), which comprise at least one processor (531), operatively associated with said sensor (521) and with said pump (540) to continuously check the water temperature in said duct (520) and to control the operation of said pump (540), said processor (531) being adapted to control frequency, voltage and current of an electric motor of said pump (540) to be able to change the water flow-rate depending on the temperature detected by said sensor (521), said heat source (511) being composed of a battery of electric resistances controlled by said control means (530) to allow said processor (531) to select each electric resistance depending on the temperature detected by said temperature sensor (521), said method comprising the following steps:
- said processor (531) uses an algorithm (531-A) for setting the selection of each electric resistance of the heat source (511), depending on the desired temperature next to said duct (520);
- said processor (531) uses an algorithm (531-B) for defining the flow-rate of said pump (540), depending on said algorithm (531-A) and on the values of frequency, voltage and current of said electric motor of said pump (540);
- said processor (531) continuously updates the definition of the flow-rate of said pump (540) to keep the temperature constant next to said duct (520).

## Patentansprüche

1. Methode für die Zubereitung von Getränken durch ein System mit einer Wasserzuführeinheit (500) für die Produktionseinheit (600) eines heißen Getränks, die genannte Einheit (500) enthält mindestens eine Wassererhitzungsvorrichtung (510), die mit mindestens einer Hitzequelle (511) ausgestattet ist, mindestens eine Pumpe (540), die zwischen mindestens einem Wasserbehälter (550) und der genannten Vorrichtung (510) angebracht ist, mindestens eine Heißwasserzuführleitung (520) von der genannten Vorrichtung (510) zur genannten Einheit (600), mindestens einen Temperatursensor (521), der mit der genannten Leitung (520) verbunden ist, Steuervorrichtungen (530), die mindestens einen Prozessor (531) enthalten, der für den Betrieb mit dem genannten Sensor (521) und der genannten Pumpe (540) verbunden ist, um fortlaufend die Wassertemperatur in der genannten Leitung (520) zu kontrollieren und um den Betrieb der genannten Pumpe (540) zu steuern, der genannte Prozessor (531) dient dazu, Frequenz, Spannung und Strom eines Elektromotors der genannten Pumpe (540) zu kontrollieren, um den Wasserdurchfluss aufgrund der vom genannten Sensor (521) erfassten Temperatur ändern zu können, die genannte Hitzequelle (511) besteht aus elektrischen Heizelementen, die durch die genannten Steuervorrichtungen (530) kontrolliert werden, um es dem genannten Prozessor (531) zu ermöglichen, jedes elektrische Heizelement aufgrund der vom genannten Temperatursensor (521) erfassten Temperatur auszuwählen, die genannte Methode enthält folgende Phasen:
- Der genannte Prozessor (531) verwendet einen Algorithmus (531-A), um jedes elektrische Heizelement der Hitzequelle (511) aufgrund der gewünschten Temperatur in der Nähe der genannten Leitung (520) einzustellen;
- Der genannte Prozessor (531) verwendet einen Algorithmus (531-B), um den Durchfluss der genannten Pumpe (540) aufgrund des genannten Algorithmus (531-A) und der Frequenz-, Spannungs- und Stromwerte des genannten Elektromotors der genannten Pumpe (540) zu definieren;
- Der genannte Prozessor (531) aktualisiert fortlaufend die Definition des Durchflusses der genannten Pumpe (540), um die Temperatur in der Nähe der genannten Leitung (520) konstant zu halten.

## Revendications

1. Méthode pour préparer des boissons à l'aide d'un système comprenant un groupe (500) d'alimentation d'eau, pour une unité (600) de production d'une boisson chaude; le groupe (500) comprend au moins un dispositif (510) de chauffage de l'eau doté au moins d'une source de chaleur (511), au moins une pompe (540) interposée entre un conteneur d'eau (550) et le dispositif (510), au moins un tube (520) d'alimentation d'eau chaude reliant le dispositif (510) à l'unité (600), au moins un capteur de température (521) associé au tube (520) ; le groupe comprend également des moyens de commande (530) équipés au moins d'un processeur (531) opérationnellement associé au capteur (521) et à la pompe (540) pour contrôler continuellement la température de l'eau dans le tube (520) et commander le fonctionnement de la pompe (540) ; le processeur (531) est apte à contrôler la fréquence, la tension et le courant du moteur électrique de la pompe (540) pour pouvoir modifier le débit d'eau en fonction de la température détectée par le capteur (521) ; la source de chaleur (511) est constituée d'une batterie de résistances électriques contrôlée par les moyens de commande (530) pour permettre au processeur (531) de sélectionner chaque résistance électrique en fonction de la température détectée par le capteur (521) de température; la méthode comprend les phases suivantes :
- le processeur (531) utilise un algorithme (531-A) pour définir la sélection de chaque résistance électrique de la source (511) de chaleur, en fonction de la température voulue à proximité du tube (520) ;
- le processeur (531) utilise un algorithme (531-B) pour définir le débit de la pompe (540), en fonction de l'algorithme (531-A) et des valeurs de fréquence, de tension et de courant du moteur électrique de la pompe (540) ;
- le processeur (531) met continuellement à jour la définition du débit de la pompe (540) pour maintenir la température constante à proximité du tube (520).
